# EUROPÄISCHE PATENTSCHRIFT

(11) **EP 0 467 162 B1**
(45) Veröffentlichungstag und Bekanntmachung des Hinweises auf die Patenterteilung: **29.09.1993**
(21) Anmeldenummer: 91111114.4
(22) Anmeldetag: 04.07.1991
(51) Int. Cl.: B65D 8/22, B29C 69/00, B29D 22/00, B29D 31/00

(54) **Verfahren zur Herstellung von Spund- und Weithalsfässern**
Process for manufacturing barrels and wide-necked vessels
Procédé pour la fabrication des bidons et des récipients à large ouverture

(30) Priorität: 19.07.1990 DE 4022926
(43) Veröffentlichungstag der Anmeldung: 22.01.1992
(73) Patentinhaber: Schütz-Werke GmbH & Co. KG., D-56242 Selters (DE)
(72) Erfinder: Schütz, Udo, W-5418 Selters (DE)
(74) Vertreter: Pürckhauer, Rolf, Dipl.-Ing.

(56) Entgegenhaltungen:
- EP-A- 0 162 117
- EP-A- 0 302 266
- EP-A- 0 342 313
- BE-A- 643 809
- DE-A- 1 914 714
- DE-C- 3 917 524
- US-A- 3 432 586
- PATENT ABSTRACTS OF JAPAN, Band 14, Nr. 315 (M-995)[4258], 6. Juli 1990; & JP-A-2 106 325 (TAKIRON CO., LTD) 18-04-1990

## Beschreibung

Die Erfindung betrifft Verfahren zur Herstellung von Spundfässern und Weithalsfässern aus thermoplastischem Kunststoff, wie sie z.B. aus US-A-3.432.586 bekannt sind.

Das Aufsetzen der aus Kunststoff gespritzten Deckel, die zwischengelagert werden, auf die aus Kunststoff geblasenen Faßkörper bei der Herstellung von Weithalsfässern ist oft mit Schwierigkeiten verbunden, weil Deckel und Faßkörper wegen der bei der Kunststoffverarbeitung auftretenden, von verschiedenen Faktoren abhängigen Maßabweichungen der Kunststoffteile, vornehmlich das unterschiedliche Schwinden der Kunststoffteile beim Abkühlen nach dem Blasen und Spritzen der Teile, nicht genau zusammenpassen.

Die Problematik der mangelnden Maßhaltigkeit der miteinander zu verbindenden Kunststoffteile tritt auch bei der Herstellung von Spundfässern aus Kunststoff auf, bei der der geblasene Faßmantel mit dem Spunddeckel und dem Boden, die in Spritzgießmaschinen hergestellt und zwischengelagert werden, verschweißt wird.

Die mangelnde Maßhaltigkeit der Kunststoffteile führt bei der Herstellung von Spundfässern und von Weithalsfässern zu einer verhältnismäßig hohen Ausschußrate. Ein weiterer Nachteil bei der Fertigung von Spund- und Weithalsfässern aus Kunststoff ist in dem fehlenden Produktionsfluß zu sehen, bedingt durch die Zwischenlagerung der Deckel und Böden, die durch den benötigten Lagerraum und den erforderlichen inner- oder zwischenbetrieblichen Transport der Deckel und Böden von den Spritzgießmaschinen zum Lager und von dort zur Fertigungsstätte der Faßkörper zu einer Verteuerung der Herstellung führt. Als weiterer Nachteil ist bei der Spundfaßfertigung das gesonderte, das Produkt verteuernde Spritzen der Böden anzusehen.

Der Erfindung liegt die Aufgabe zugrunde, Verfahren zur Herstellung von Spund- und Weithalsfässern aus Kunststoff zu entwickeln, die eine Maßhaltigkeit der gespritzten Deckel und geblasenen Faßkörper gewährleisten, und nach diesen Verfahren arbeitende Anlagen mit höherer Produktionsleistung zu schaffen.

Diese Aufgabe ist einen ersten Aspekt der Erfindung gemäß gelöst durch ein Verfahren zur Herstellung von Spundfässern (Anspruch 1), das gekennzeichnet ist durch das Blasen von Doppelfaßkörpern aus Kunststoff und mittiges Trennen derselben in zwei Faßkörper, die Spritzgießherstellung von Spunddeckeln aus Kunststoff, das Abkühlen der Faßkörper und der Spunddeckel auf Paßform in Kühl- und Kalibrierstrecken, die der Blasmaschine zur Herstellung der Doppelfaßkörper und der Spritzgießmaschine für die Faßdeckel nachgeordnet sind, und das Verschweißen der Spunddeckel mit den Faßkörpern.

Ein weiteres wesentliches Verfahrensmerkmal der Spundfaßherstellung besteht darin, daß die Spunddeckel mit einem Übermaß des unteren Deckelrandes gespritzt werden und daß nach dem Durchlaufen der Kühl- und Kalibrierstrecke der über das Nenn-Höhenmaß der Deckel vorstehende Ringabschnitt des unteren Deckelrandes zur Vorbereitung einer Schweißfläche am unteren Deckelrand ohne die sich beim Spritzen der Deckel bildende Oxidhaut abgeschnitten wird.

Nach dem Verschweißen von Spunddeckel und Faßkörper wird der Schweißnahtbereich zur Beseitigung von Schweißspannungen durch Beflammen erhitzt.

Das zur Lösung der gestellten Aufgabe erfindungsgemäß vorgesehene Verfahren zur Herstellung von Weithalsfässern (Anspruch 5) einen zweiten Aspekt der Erfindung, sieht das Blasen von Doppelfaßkörpern aus Kunststoff und mittiges Trennen derselben in zwei Faßkörper mit jeweils einer mit Abstand unterhalb der Faßöffnung angeformten Bordur, die Spritzgießherstellung von Faßdeckeln aus Kunststoff mit einem am unteren Deckelrand angeformten Außenflansch, das Abkühlen der Faßkörper und der Faßdeckel auf Paßform in Kühl- und Kalibrierstrecken, die der Blasmaschine zur Herstellung der Doppelfaßkörper und der Spritzgießmaschine für die Faßdeckel nachgeordnet sind, das Einspritzen einer Dichtungsmasse aus Kunststoff in die Deckel und das Aufsetzen der Deckel auf die Faßkörper und Verschließen der Deckel mit einem Spannring vor.

Der Kerngedanke der Erfindung ist bei den beiden Verfahren zur Herstellung von Spundfässern und von Weithalsfässern im Abkühlen der Faßkörper und der Faßdeckel auf Paßform in der Blasmaschine zur Herstellung der Doppelfaßkörper und der Spritzgießmaschine für die Faßdeckel nachgeordneten Kühl- und Kalibrierstrecken zu sehen. Diese fertigungstechnische Maßnahme im Rahmen eines fortlaufenden Produktionsprozesses schafft die Voraussetzung für das präzise Verschweißen von Spunddeckel und Faßkörper bei der Spundfaßfertigung und ein paßgenaues Aufsetzen der Deckel auf die Faßkörper bei der Herstellung von Weithalsfässern, sorgt für eine erhebliche Qualitätsverbesserung der Fässer und senkt die Ausschußrate auf ein Minimum. Das Blasen von Doppelfaßkörpern und die Einbindung der Faßkörper- und der Deckelherstellung in einen kontinuierlichen Fertigungsablauf ohne eine Zwischenlagerung der Faßkörper oder der Deckel führen zu einer wesentlichen Produktionssteigerung gegenüber den bekannten Herstellungsverfahren für Weithals- und Spundfässer und einer Senkung der Produktionskosten durch die Einsparung von Personal und Lagerraum und den entfallenden Transport der Teile ins Zwischenlager und von dort zur Endfertigung.

Entprechende Anlagen sind, nach zwei weiteren Aspekten der Erfdindung, indem Ansprüche 7 und 8 definiert.

Die Erfindung ist nachstehend anhand von zwei Anlagen zur Herstellung von Spundfässern und von Weithalsfässern aus Kunststoff näher erläutert. Es zeigt in schematischer Darstellung
- Fig. 1: eine Grundriß einer Anlage zur Herstellung von Spundfässern,
- Fig. 2: die Kühl- und Kalibrierstrecke für die Faßkörper der Anlage nach Fig. 1,
- Fig. 3: eine ausschnittsweise vergrößerte Darstellung der Kühl- und Kalibrierstrecke für die Spunddeckel der Anlage nach Fig. 1 und
- Fig. 4: einen Grundriß einer Anlage zur Herstellung von Weithalsfässern.

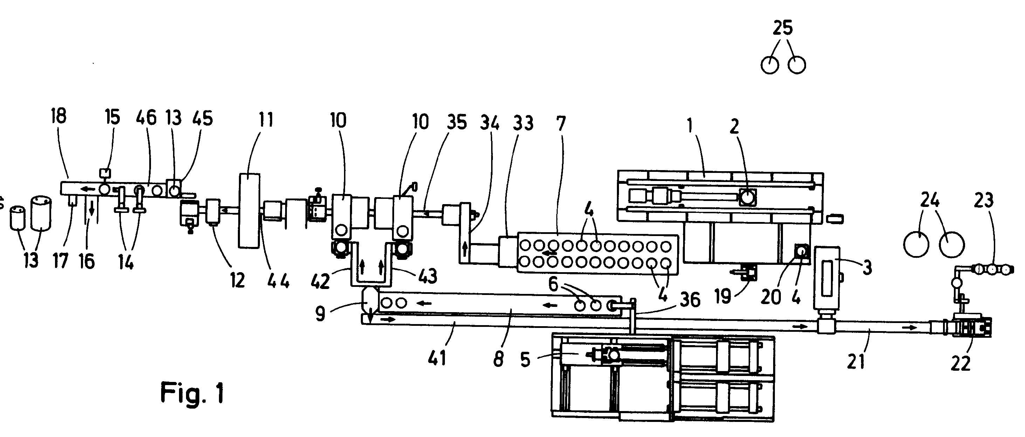

Hauptbestandteile der Anlage nach den Fign. 1 bis 3 zur Herstellung von Spundfässern sind eine Maschine 1 zum Blasen von Doppelfaßkörpern 2 aus Kunststoff, eine Schneideeinrichtung 3 zum mittigen Trennen der Doppelfaßkörper 2 in zwei Faßkörper 4, eine Spritzgießmaschine 5 zur Herstellung der Spunddeckel 6 aus Kunststoff, der Blasmaschine 1 und der Spritzgießmaschine 5 nachgeordnete Kühl- und Kalibrierstrecken 7, 8 für die Faßkörper 4 und die Spunddeckel 6, eine an die Kühl- und Kalibrierstrecke 8 für die Spunddeckel 6 anschließende Bearbeitungsmaschine 9 zum maßgenauen Schneiden des unteren Deckelrandes und Abschneiden der Butzen vom Spritzen in der Spritzgießmaschine 5, zwei Schweißmaschinen 10 zum Verschweißen der Spunddeckel 6 mit den Faßkörpern 4, eine Maschine 11 zum Bearbeiten der Schweißnaht, eine Einrichtung 12 zum Erhitzen des Schweißnahtbereiches der Spundfässer 13 mittels Flamme, eine Einrichtung 14 zur Prüfung der Dichtheit der Spundfässer 13, eine Signiereinrichtung 15, ein Querförderer 16 zum Ausschleusen der fehlerhaften Spundfässer, eine Konfektioniereinrichtung 17 und eine Förderbandentnahmestation 18.

Die in der Blasmaschine 1 aus einem Kunststoffgranulat hergestellten Doppelfaßkörper 2 werden von einem Roboter 19 zu der Schneideeinrichtung 3 transportiert, in der die Doppelfaßkörper 2 durch Herausschneiden eines Mittelringes, der die Blasöffnung des Einschießblasdornes enthält, in zwei gleiche Faßkörper 4 geteilt werden. Die Faßkörper 4 werden von dem Roboter 19 von der Schneideeinrichtung 3 zu einer Wiegeeinrichtung 20 gebracht. Faßkörper mit Übergewicht werden aussortiert und von dem Roboter 19 einem Förderband 21 übergeben, das die übergewichtigen Faßkörper zusammen mit den in der Schneideeinrichtung 3 als Abfallprodukt anfallenden Ringen einer Schneidmühle 22 zuführt, wobei das Förderband 21 als Kühlstrecke für das mit Temperaturen von 60 bis 70° C anfallende Abfallmaterial dient. Eine Absaugvorrichtung 23 fördert das in der Schneidmühle 22 produzierte Granulat in Mahlgutsilos 24. Das Mahlgut aus den Silos 24 wird mit frischem Granulat aus den Rohstoffsilos 25 vermischt, und die Granulatmischung wird der Blasmaschine 1 zugeleitet. Der Roboter 19 bringt die Faßkörper 4 mit vorschriftsmäßigem Gewicht zu der Kühl- und Kalibrierstrecke 7.

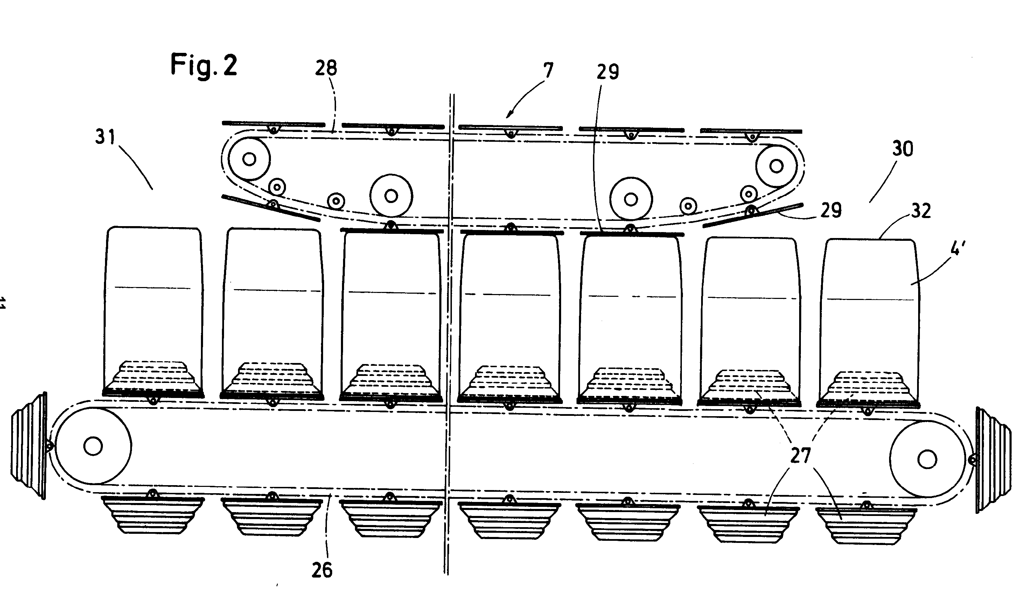

Die Kühl- und Kalibrierstrecke 7 nach Fig. 2 weist einen unteren Endlosförderer 26 mit Kühl- und Kalibriersockeln 27 zur Aufnahme der Faßkörper 4 in Kopflage 4' und einen oberen Endlosförderer 28 mit Andrückplatten 29 zum Halten der Faßkörper 4 auf den Kalibriersockeln 27 auf, wobei die Endlosförderer 26, 28 als Kettenförderer ausgebildet sind. Der untere Endlosförderer 26 ist im Zuführbereich 30 und Entnahmebereich 31 über die Enden des oberen Endlosförderers 28 vorgezogen, so daß im Zuführbereich 30 genügend Platz für den Roboter 19 zur Verfügung steht, um einen Faßkörper 4 in Kopflage 4' auf einen Kalibriersockel 27 aufzusetzen, bevor eine Andrückplatte 29 des oberen Endlosförderers 28 sich auf den Faßboden 32 auflegt. In gleicher Weise ist im Entnahmebereich 31 Platz für eine Entnahme- und Wendevorrichtung 33 vorhanden, um einen Faßkörper nach Durchlaufen der Kühl-und Kalibrierstrecke 7 und Freigabe des Faßkörpers durch die jeweils auf dem Faßboden 32 aufliegende Andrückplatte 29 des oberen Endlosförderers 28 von dem Kalibriersockel 27 abzuheben und den Faßkörper 4 liegend und mit in Förderrichtung weisender Längsachse an einen Querförderer 34 zu übergeben. Ein als Kettenförderer ausgebildeter Längsförderer 35 übernimmt die nunmehr quer zur Förderrichtung liegenden Faßkörper 4 von dem Querförderer 34 und transportiert diese zu zwei hintereinander angeordneten Spiegelschweißmaschinen 10.

Die mit einer Manteltemperatur von ca. 50 - 60° C in die Kühl- und Kalibrierstrecke 7 eintretenden Faßkörper 4 werden taktweise über einen Zeitraum von ca. 30 Minuten von Haltestation zu Haltestation durch die Kühl- und Kalibrierstrecke 7 gefördert und auf Raumtemperatur abgekühlt. In den hintereinander liegenden Haltestationen werden die Faßkörper 4 mit Kühlluft angeblasen. Dabei wird der Wärmeentzug von den Faßkörpern überwiegend durch Konvektion und Wärmeableitung über die Kalibriersockel 27 und die Andrückplatten 29 aus Aluminium mit einer hohen Wärmeleitzahl bewirkt. Durch die Abkühlung der Faßkörper 4 auf den Kalibriersockeln 27 wird erreicht, daß der Durchmesser des Öffnungsrandes der die Kühl- und Kalibrierstrecke 7 verlassenden Faßkörper 4 mit dem Durchmesser des unteren Randes der in der Spritzgießmaschine 5 gespritzten Spunddeckel 6 übereinstimmt, nachdem diese die der Spritzgießmaschine 5 nachgeordnete Kühl- und Kalibrierstrecke 8 durchlaufen haben.

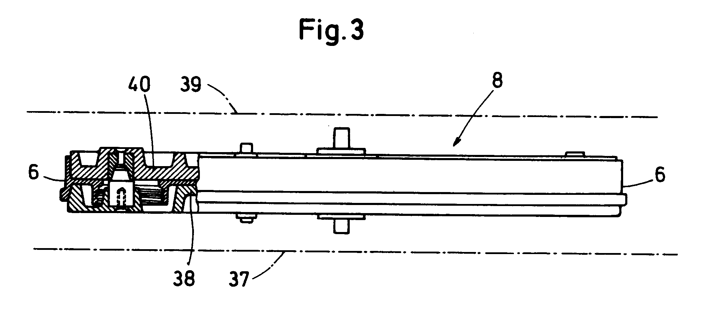

Aufbau und Wirkungsweise der Kühl- und Kalibrierstrecke 8, der die in der Spritzgießmaschine 5 gespritzten Spunddeckel 6 durch einen Roboter 36 übergeben werden, sind analog dem Aufbau und der Wirkungsweise der Kühl- und Kalibrierstrecke 7 für die Faßkörper 4. Die Kühl- und Kalibrierstrecke 8 nach Fig. 3 weist einen unteren Endlosförderer 37 mit unteren Kühl- und Kalibrierplatten 38 und einen oberen Endlosförderer 39 mit oberen Kühl- und Kalibrierplatten 40 zum Einspannen der Spunddeckel 6 auf. Die Endlosförderer 37, 39 sind als Kettenförderer ausgebildet. Die Kühl- und Kalibrierplatten 38, 40 sind aus Aluminium hergestellt.

In der an die Kühl- und Kalibrierstrecke 8 anschließenden Bearbeitungsmaschine 9 werden die vom Spritzen stammenden Butzen von den Spunddeckeln 6 und der über das Nenn-Höhenmaß der Spunddeckel vorstehende Ringabschnitt des unteren Deckelrandes der mit einem Übermaß gespritzten Deckel zur Vorbereitung einer Schweißfläche am unteren Deckelrand ohne die sich beim Spritzen der Deckel bildende Oxidhaut abgeschnitten. Butzen und Ringe werden mit einem Transportband 41 zu dem Transportband 21 überführt und von diesem zusammen mit den beim Blasen und Trennen der Doppelfaßkörper 2 anfallenden Abfallprodukten zu der Schneidmühle 22 gefördert.

Zwei Portal-Linearroboter 42, 43 transportieren die Spunddeckel 6 von der Bearbeitungsmaschine 9 zu den beiden Spiegelschweißmaschinen 10, in denen die Spunddeckel 6 mit den aus der Kühl- und Kalibrierstrecke 7 kommenden Faßkörpern 4 genau passend verschweißt werden.

Beim Verschweißen des unteren, oxidhautfreien Deckelrandes mit dem durch das Trennen der Doppelfaßkörper 2 in der Schneideeinrichtung 3 erhaltenen oxidhautfreien Öffnungsrand der Faßkörper bildet sich eine homogene Schweißnaht mit hoher Dauerstandfestigkeit und Spannungsrißbeständigkeit.

Es besteht die Möglichkeit, vor den Spiegelschweißmaschinen 10 Pufferzonen für die Faßkörper 4 und die Spunddeckel 6 vorzusehen.

Ein als Kettenförderer ausgebildeter Längsförderer 44 transportiert die Spundfässer 13 von den Spiegelschweißmaschinen 10 zu der Bearbeitungsmaschine 11, die die überstehende Schweißnaht der Spundfässer abschneidet, und von dort über die Einrichtung 12 zum Erhitzen des Schweißnahtbereiches der Spundfässer mittels einer Flamme zur Beseitigung von Schweißspannungen zu einer Wendeeinrichtung 45, die die Spundfässer in aufrechter Position an ein weiteres, längsgerichtetes Förderband 46 übergibt.

Das Förderband 46 transportiert die Spundfässer 13 weiter zu der Prüfeinrichtung 14, in der die Fässer auf Dichtheit geprüft werden, von dort zu der Signiereinrichtung 15, in der die Fässer eine fortlaufende Produktionsnummer und ein Firmenzeichen erhalten, vorbei an dem Querförderer 16 zum Ausschleusen der fehlerhaften Fässer zu der Konfektioniereinrichtung 17, in der die Spunde mit Gewindestopfen verschlossen werden und die Fässer ggf. noch weiter kundenspezifisch ausgerüstet werden, und von dort zu der Entnahmestation 18 am Ende des Förderbandes 46.

Die fertiggestellten Spundfässer werden vor dem Abtransport zum Abnehmer vorzugsweise in einer nicht dargestellten Palettiereinrichtung auf Paletten gestellt, die nach Bedarf in einer anschließenden, ebenfalls nicht dargestellten Stretcheinrichtung zu Einheiten von mehreren Paletten zusammengepackt werden können.

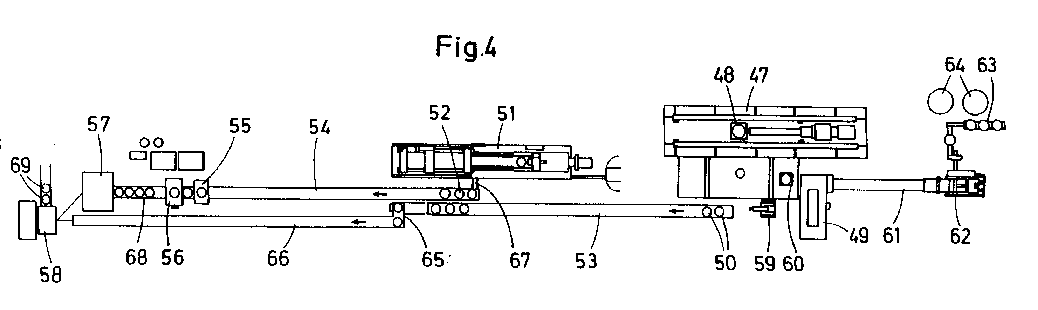

Hauptbestandteile der Anlage nach Fig. 4 zur Herstellung von Weithalsfässern sind eine Maschine 47 zum Blasen von Doppalfaßkörpern 48 aus Kunststoff, eine Schneideeinrichtung 49 zum mittigen Trennen der Doppelfaßkörper 48 in zwei Faßkörper 50 mit jeweils einer mit Abstand unterhalb der Faßöffnung angeformten Bordur, eine Spritzgießmaschine 51 zur Herstellung der Faßdeckel 52 aus Kunststoff, der Blasmaschine 47 und der Spritzgießmaschine 51 nachgeordnete Kühl- und Kalibrierstrecken 53, 54 für die Faßkörper 50 und die Faßdeckel 52, eine Maschine 55 zum Abtrennen der Butzen von den Faßdeckeln 52, eine Maschine 56 zum Einspritzen eines Kunststoff-Dichtmaterials in die Deckel 52 und eine dieser nachgeordnete Trockeneinrichtun5 57 sowie ein Montagestand 58 zum Aufsetzen der Deckel 52 auf die Faßkörper 50 und Verschließen der Deckel mit einem Spannring. Bei der Herstellung von Weithalsfässern mit Inliner werden die Faßkörper 50 auf dem Montagestand 58 mit einem flexiblen Inliner aus einer Kunststoffolie oder einer Metall-Kunstverbundfolie ausgestattet.

Die in der Blasmaschine 47 aus einem Kunststoffgranulat hergestellten Doppelfaßkörper 48 werden von einem Roboter 59 zu der Schneideeinrichtung 49 transportiert, in der die Doppelfaßkörper 48 in zwei gleiche Faßkörper 50 geteilt werden. Die Faßkörper 50 werden von dem Roboter 59 von der Schneideeinrichtung 49 zu einer Wiegeeinrichtung 60 gebracht. Faßkörper mit Übergewicht werden aussortiert und von dem Roboter 59 einem Förderband 61 übergeben, das die übergewichtigen Faßkörper zusammen mit den in der Schneideeinrichtung 49 anfallenden Kunststoffringen einer Schneidmühle 62 zuführt. Eine Absaugvorrichtung 63 fördert das in der Schneidmühle 62 produzierte Granulat in Mahlgutsilos 64 zur Wiederverarbeitung in einer Mischung mit frischem Granulat. Der Roboter 59 bringt die Faßkörper 50 mit vorschriftsmäßigem Gewicht zu der Kühl- und Kalibrierstrecke 53, deren Aufbau und Wirkungsweise der Konstruktion und der Wirkungsweise der Kühl- und Kalibrierstrecke 7 der vorbeschriebenen Anlage zur Herstellung von Spundfässern entsprechen.

Nach Durchlaufen der Kühl- und Kalibrierstrecke 53 werden die Faßkörper 50 von einer Entnahme- und Wendevorrichtung 65 an ein Transportband 66 übergeben, das die Faßkörper zu dem Montagestand 58 bringt.

Die die Spritzgießmaschine 51 verlassenden Deckel 52 werden von einem Roboter 67 übernommen und in die Kühl- und Kalibrierstrecke 54 eingeschleust, die der Kühl- und Kalibrierstrecke 8 der vorbeschriebenen Anlage zur Herstellung von Spundfässern entspricht. In der an die Kühl- und Kalibrierstrecke 54 anschließenden Bearbeitungsmaschine 55 werden die an die Deckel 52 angespritzten Butzen abgeschnitten, die zusammen mit dem in der Schneideeinrichtung 49 produzierten Abfall und den Ausschußfässern von der Blasmaschine 47 in die Schneidmühle 62 transportiert werden. Von der Bearbeitungsmaschine 55 werden die Faßdeckel 52 in die Spritzmaschine 56 überführt, mit der eine Zweikomponenten-Kunststoffdichtungsmasse in die Deckel eingespritzt wird. Von der Spritzmaschine 56 werden die Deckel mit einem Förderband 68 in die Trockeneinrichtung 57 transportiert, in der die auf dem Transportweg zwischen Spritzmaschine und Trockeneinrichtung eingeleitete Reaktion zwischen der Kunststoffdichtungsmasse und einem beigemischten Härter abgeschlossen wird. Auf dem Montagestand 58 werden die der Trockeneinrichtung 57 entnommenen Faßdeckel 52 auf die Faßkörper 50 - ggf. nach Einbringen eines Inliners - aufgesetzt, und die Faßdeckel werden mit einem Spannring verschlossen.

Die fertiggestellten Weithalsfässer 69 werden nach dem Signieren palettiert, und die Paletten mit den Fässern können nach Bedarf zu Einheiten von mehreren Paletten zusammengepackt werden.

## Patentansprüche

1. Verfahren zur Herstellung von Spundfässern aus thermoplastischem Kunststoff, gekennzeichnet durch das Blasen von Doppelfaßkörpern aus Kunststoff und mittiges Trennen derselben in zwei Faßkörper, die Spritzgießherstellung von Spunddeckeln aus Kunststoff, das Abkühlen der Faßkörper und der Spunddeckel auf Paßform in Kühl- und Kalibrierstrecken, die der Blasmaschine zur Herstellung der Doppelfaßkörper und der Spritzgießmaschine für die Faßdeckel nachgeordnet sind, und durch das Verschweißen der Spunddeckel mit den Faßkörpern.

2. Verfahren nach Anspruch 1, dadurch gekennzeichnet, daß die Spunddeckel mit einem Übermaß des unteren Deckelrandes gespritzt werden und daß nach dem Durchlaufen der Kühl- und Kalibrierstrecke der über das Nenn-Höhenmaß der Deckel vorstehende Ringabschnitt des unteren Deckelrandes zur Vorbereitung einer Schweißfläche am unteren Deckelrand ohne die sich beim Spritzen der Deckel bildende Oxidhaut abgeschnitten wird.

3. Verfahren nach Anspruch 1 und 2, dadurch gekenzeichnet, daß nach dem Verschweißen von Spunddeckel und Faßkörper der Schweißnahtbereich zur Beseitigung von Schweißspannungen erhitzt wird.

4. Verfahren nach Anspruch 3, gekennzeichnet durch eine Beflammung des Schweißnahtbereiches der Spundfässer.

5. Verfahren zur Herstellung von Weithalsfässern aus thermoplastischem Kunststoff, gekennzeichnet durch das Blasen von Doppelfaßkörpern aus Kunststoff und mittiges Trennen derselben in zwei Faßkörper mit jeweils einer mit Abstand unterhalb der Faßöffnung angeformten Bordur, die Spritzgießherstellung von Faßdeckeln aus Kunststoff mit einem am unteren Deckelrand angeformten Außenflansch, das Abkühlen der Faßkörper und der Faßdeckel auf Paßform in Kühl- und Kalibrierstrecken, die der Blaschmaschine zur Herstellung der Doppelfaßkörper und der Spritzgießmaschine für die Faßdeckel nachgeordnet sind, das Einspritzen einer Dichtungsmasse aus Kunststoff in die Deckel und das Aufsetzen der Deckel auf die Faßkörper und Verschließen der Deckel mit einem Spannring.

6. Verfahren nach Anspruch 5 zur Herstellung von Weithalsfässern mit Inliner, gekennzeichnet durch das Einbringen eines flexiblen Inliners aus einer Kunststoffolie oder einer Metall-Kunstverbundfolie in die Faßkörper vor dem Aufsetzen des Deckels.

7. Anlage zur Herstellung von Spundfässern gemäß dem Verfahren nach den Ansprüchen 1 bis 4, gekennzeichnet durch eine Maschine (1) zum Blasen von Doppelfaßkörpern (2) aus Kunststoff, eine Schneideeinrichtung (3) zum mittigen Trennen der Doppelfaßkörper (2) in zwei Faßkörper (4), eine Spritzgießmaschine (5) zur Herstellung der Spunddeckel (6) aus Kunststoff, der Blasmaschine (1) und der Spritzgießmaschine (5) nachgeordnete Kühl- und Kalibrierstrecken (7, 8) für die Faßkörper (4) und die Spunddeckel (6), eine an die Kühl- und Kalibrierstrecke (8) für die Spunddeckel (6) anschließende Bearbeitungsmaschine (9) zum maßgenauen Schneiden des unteren Deckelrandes und Abschneiden der Butzen vom Spritzgießen, eine Schweißmaschine (10) zum Verschweißen der Spunddeckel (6) mit den Faßkörpern (4), eine Maschine (11) zum Bearbeiten der Schweißnaht, eine Einrichtung (12) zum Erhitzen des Schweißnahtbereiches der Spundfässer (13) und eine Einrichtung (14) zur Dichtheitsprüfung der Spundfässer (13).

8. Anlage zur Herstellung von Weithalsfässern gemäß dem Verfahren nach Anspruch 5 und 6, gekennzeichnet durch eine Maschine (47) zum Blasen von Doppelfaßkörpern (48) aus Kunststoff, eine Schneideeinrichtung (49) zum mittigen Trennen der Doppelfaßkörper (48) in zwei Faßkörper (50) mit jeweils einer mit Abstand unterhalb der Faßöffnung angeformten Bordur, eine Spritzgießmaschine (51) zur Herstellung der Faßdeckel (52) aus Kunststoff, der Blasmaschine (47) und der Spritzgießmaschine (51) nachgeordnete Kühl- und Kalibrierstrecken (53, 54) für die Faßkörper (50) und die Faßdeckel (52), eine Maschine (56) zum Einspritzen eines Kunststoff-Dichtungsmaterials in die Deckel (52) und eine dieser nachgeordnete Trockeneinrichtung (57) sowie einen Montagestand (58) zum Aufsetzen der Deckel (52) auf die Faßkörper (50) und Verschließen der Deckel mit einem Spannring.

9. Anlage nach Anspruch 8 zur Herstellung von Weithalsfässern mit Inliner, gekennzeichnet durch einen Montagestand (58) zur Ausstattung der Faßkörper (50) mit einem flexiblen Inliner aus einer Kunststoffolie oder einer Metall-Kunststoffverbundfolie.

10. Anlage nach einem der Ansprüche 7 bis 9, dadurch gekennzeichnet, daß die Kühl- und Kalibrierstrecke (7) für die Faßkörper (4) einen unteren Endlosförderer (26) mit Kühl- und Kalibriersockeln (27) zur Aufnahme der Faßkörper (4) in Kopflage (4') und einen oberen Endlosförderer (28) mit Andrückplatten (29) zum Halten der Faßkörper (4) auf den Kalibriersockeln (27) aufweist.

11. Anlage nach einem der Ansprüche 7 bis 10, dadurch gekennzeichnet, daß die Kühl- und Kalibrierstrecke (8) für die Faßdeckel (6) einen unteren Endlosförderer (37) mit unteren Kühl- und Kalibrierplatten (38) und einen oberen Endlosförderer (39) mit oberen Kühl- und Kalibrierplatten (40) zum Einspannen der Deckel (6) aufweist.

12. Anlage nach Anspruch 10 und 11, dadurch gekennzeichnet, daß der untere Endlosförderer (26; 37) der Kühl- und Kalibrierstrecken (7, 8) im Zuführ- und Entnahmebereich (30, 31) über die Enden des oberen Endlosförderers (28; 39) vorgezogen ist.

13. Anlage nach einem der Ansprüche 10 bis 12, gekennzeichnet durch eine Ausbildung der Endlosförderer (26, 28; 37, 39) als Kettenförderer.

## Claims

1. A method of manufacturing bung barrels from thermoplastic plastics material, characterized by blowing double barrel bodies of plastics material and parting the same in the middle to form two barrel bodies, making bung tops from plastics material by injection moulding, cooling the barrel bodies and bung tops to fit in cooling and sizing lines which are arranged downstream of the blowing machine for making the double barrel bodies and the injection moulding machine for the barrel tops, and by welding the barrel tops to the barrel bodies.

2. A method according to claim 1, characterized in that the bung tops are injected with an excess lower top rim and in that, after traversing the cooling and sizing line, the annular section of the lower top rim projecting beyond the nominal height of the top is cut off to prepare a welding face on the lower top rim, free from the oxide skin formed in the injection of the tops.

3. A method according to claim 1 and 2, characterized in that, after welding the bung top and the barrel body, the weld seam region is heated to remove weld stresses.

4. A method according to claim 3, characterized by flaming the weld seam region of the barrel body.

5. A method of manufacturing wide-necked vessels from thermoplastic plastics material, characterized by blowing double vessel bodies of plastics material and parting the same in the middle to form two vessel bodies, each with a formed bead spaced below the vessel opening, making vessel tops from plastics material by injection moulding, with an outer flange formed on the lower edge of the top, cooling the vessel bodies and vessel tops to fit in cooling and sizing lines which are arranged downstream of the blowing machine for making the double vessel bodies and the injection moulding machine for the vessel tops, injection of a sealing mass into the tops and fitting the tops on the vessel bodies and closing the tops with a clamping ring.

6. A method according to claim 5 for manufacturing wide-necked vessels with inner liners, characterized by the introduction of a flexible inner liner of a plastics foil or a composite metal and plastics foil into the vessel bodies before fitting the top.

7. Apparatus for manufacturing bung barrels according to the method according to claims 1 to 4, characterized by a machine (1) for blowing double barrel bodies (2) of plastics material, a cutting device (3) for parting the double barrel bodies (2) in the middle to form two barrel bodies (4), an injection moulding machine (5) for making the bung tops (6) of plastics material, cooling and sizing lines (7, 8) for the barrel bodies (4) and the barrel tops (6) downstream of the blowing machine (1) and the injection moulding machine (5), a machine tool (9) following the cooling and sizing line (8) for the barrel tops (6) for cutting off the lower rim of the top to size and cutting off the injection moulding sprue, a welding machine (10) for welding the barrel tops (6) to the barrel bodies (4), a machine (11) for machining the weld seam, a device (12) for heating the region of the weld seam of the barrels (13) and a device (14) for testing the tightness of the bung barrels (13).

8. Apparatus for manufacturing wide-necked vessels according to the method according to claims 5 and 6, characterized by a machine (47) for blowing double vessel bodies (48) of plastics material, a cutting device (49) for parting the double vessel bodies (48) in the middle to form two vessel bodies (50) each with a formed bead spaced below the vessel opening, an injection moulding machine (51) for making the vessel tops (52) of plastics material, cooling and sizing lines (53, 54) for the vessel bodies (50) and the vessel tops (52) downstream of the blowing machine (47) and the injection moulding machine (51), a machine (56) for injecting a plastics sealing material into the tops (52) and a drying device (57) downstream thereof, as well as a mounting station (58) for fitting the tops (52) on to the vessel bodies (50) and for closing the tops with a clamping ring.

9. Apparatus according to claim 8, for manufacturing wide-necked vessels with inner liners, characterized by a mounting station (58) for fitting the vessel bodies (50) with a flexible inner liner of plastics foil or a composite metal and plastics foil.

10. Apparatus according to any of claims 7 to 9, characterized in that the cooling and sizing line (7) for the barrel bodies (4) comprises a lower endless conveyor (26) with cooling and sizing pedestals (27) for receiving the barrel bodies (4') upside down and an upper endless conveyor (28) with pressure plates (29) for holding the barrel bodies (4) on the sizing pedestals (27).

11. Apparatus according to any of claims 7 to 10, characterized in that the cooling and sizing line (8) for the barrel tops (6) comprises a lower endless conveyor (37) with lower cooling and sizing plates (38) and an upper endless conveyor (39) with upper cooling and sizing plates (40) for clamping the tops (6).

12. Apparatus according to claim 10 and 11, characterized in that the lower endless conveyor (26; 37) of the cooling and sizing lines (7, 8) is extended beyond the ends of the upper endless conveyor (28; 39) in the in-feed and take-off regions (30, 31).

13. Apparatus according to any of claims 10 to 12, characterized by making the endless conveyors (26, 28; 37, 39) as chain conveyors.

## Revendications

1. Procédé de fabrication de fûts à bondon en matière plastique thermoplastique, caractérisé par le soufflage de corps de fût doubles et par la séparation de ceux-ci par le milieu en deux corps de fût, par la fabrication de couvercles à bondon par moulage par injection, par le refroidissement des corps de fût et des couvercles à bondon à la forme qui convient dans des zones de refroidissement et de calibrage prévues en aval de la machine de soufflage destinée à la fabrication des corps de fût doubles et de la machine de moulage par injection des couvercles du fût, et par le soudage des couvercles à bondon aux corps de fût.

2. Procédé suivant la revendication 1, caractérisé en ce qu'il consiste à mouler les couvercles à bondon par injection en surdimensionnant le bord inférieur du couvercle et, après le passage dans la zone de refroidissement et de calibrage, à enlever par découpage la partie annulaire du bord inférieur du couvercle, qui dépasse la dimension nominale du couvercle, pour préparer une surface de soudage sur le bord inférieur du couvercle sans la peau d'oxyde qui se forme lors du moulage du couvercle par injection.

3. Procédé suivant la revendication 1 ou 2, caractérisé en ce qu'il consiste à chauffer, après la soudure du couvercle à bondon et du corps du fût, la partie du cordon de soudure pour éliminer toute contrainte de soudage.

4. Procédé suivant la revendication 3, caractérisé par un passage à la flamme de la partie du cordon de soudure des fûts à bondon.

5. Procédé de fabrication de fûts à goulot large en matière plastique thermoplastique, caractérisé par le soufflage de corps de fût doubles en matière plastique et par la séparation de ceux-ci par le milieu en deux corps de fût ayant chacun une bordure ménagée à une certaine distance en-dessous du goulot du fût, par la fabrication par moulage par injection de couvercles de fûts en matière plastique ayant une bride extérieure issue du bord inférieur du couvercle, par le refroidissement des corps de fût et des couvercles de fût à la forme qui convient dans des zones de refroidissement et de calibrage prévues en aval de la machine de soufflage destinée à la fabrication des corps de fût doubles et de la machine de moulage par injection des couvercles de fût, par l'injection d'une masse d'étanchéité en matière plastique dans les couvercles et par la mise des couvercles sur les corps de fût et la fermeture des couvercles par un collier de serrage.

6. Procédé suivant la revendication 5 de fabrication de fûts à goulot large, à inliner, caractérisé par l'introduction d'un inliner souple en une feuille de matière plastique ou en une feuille composite métal-matière plastique dans les corps de fût avant la pose du couvercle.

7. Installation de fabrication du fût à bondon suivant le procédé des revendications 1 à 4, caractérisée par une machine (1) de soufflage de corps de fût (2) doubles en matière plastique, par un dispositif de coupe (3) destiné à séparer par le milieu les corps de fût (2) doubles en deux corps de fût (4), par une machine de moulage par injection (5) destinée à fabriquer les couvercles à bondon (6) en matière plastique, par des zones de refroidissement et de calibrage (7,8) prévues en aval de la machine de soufflage (1) et de la machine de moulage par injection (5) et destinées au corps de fût (4) et au couvercle à bondon (6) par une machine d'usinage (9) venant à la suite de la zone de refroidissement et de calibrage (8) des couvercles à bondon (6) et destinée à découper d'une manière précise en dimensions le bord inférieur du couvercle et à enlever par les proéminences provenant du moulage par injection, par une machine de soudage (10) destinée à souder les couvercles à bondon (6) au corps de fût (4), par une machine (11) destinée à araser le cordon de soudure, par un dispositif (12) destiné à chauffer la zone du cordon de soudure des fûts à bondon (13) et par un dispositif (14) destiné à vérifier l'étanchéité des fûts à bondon (13).

8. Installation de fabrication de fûts à col large suivant le procédé des revendications 5 et 6, caractérisée par une machine (47) destinée à souffler des corps de fût (48) doubles en matière plastique, par un dispositif de coupe (49) destiné à séparer par le milieu les corps de fût (48) doubles en deux corps de fût (50) ayant chacun une bordure formée à distance en-dessous du goulot du fût, par une machine de moulage par injection (51) destinée à fabriquer les couvercles de fûts (52) en matière plastique, par des zones de refroidissement et de calibrage (53, 54) des corps de fût (50) et des couvercles de fûts (52), prévues en aval de la machine de soufflage (47) et de la machine de moulage par injection (51), par une machine (56) d'injection d'une matière d'étanchéité en matière plastique dans les couvercles (52) et par un dispositif de séchage (57) en aval de cette machine (56), ainsi que par un poste de montage (58) destiné à poser les couvercles (52) sur les corps de fût (50) et à fermer les couvercles à l'aide d'un collier de serrage.

9. Installation suivant la revendication 8 de fabrication de fûts à goulot large ayant des inliners, caractérisée par un poste de montage (58) pour équiper le corps de fût (50) d'un inliner souple en une feuille de matière plastique ou en une feuille composite de métal et de matière plastique.

10. Installation suivant l'une des revendications 7 à 9, caractérisée en ce que la zone de refroidissement et de calibrage (7) des corps de fût (4) comporte un convoyeur inférieur (26) sans fin à embase de refroidissement et de calibrage (27), destiné à recevoir les corps de fût (4) sens dessus dessous (4') et un convoyeur supérieur (28) sans fin ayant des plateaux (29) d'application d'une pression et destiné à maintenir les corps de fût (4) sur les embases de calibrage (27).

11. Installation suivant l'une des revendications 7 à 10, caractérisée en ce que la zone de refroidissement et de calibrage (8) des couvercles de fûts (6) comporte un convoyeur inférieur (37) sans fin ayant des plateaux (38) inférieurs de refroidissement et de calibrage et un convoyeur supérieur (39) sans fin ayant des plateaux (40) supérieurs de refroidissement et de calibrage pour bloquer les couvercles (6).

12. Installation suivant la revendication 10 ou 11, caractérisée en ce que le convoyeur inférieur (26, 37) sans fin des zones de refroidissement et de calibrage (7, 8) est prévu dans la zone d'amenée et d'enlèvement (30, 31) au-dessus des extrémités du transporteur supérieur (28, 39) sans fin.

13. Installation suivant l'une des revendications 10 à 12, caractérisée en ce que les convoyeurs (26, 28; 37, 31) sans fin sont constitués sous la forme de convoyeurs à chaîne.
